Europäisches Patentamt

European Patent Office

Office européen des brevets

(11) Veröffentlichungsnummer : **0 116 378**
**B1**

(12) **EUROPÄISCHE PATENTSCHRIFT**

(45) Veröffentlichungstag der Patentschrift :
30.12.86

(51) Int. Cl.⁴ : **H 02 K 21/18**, H 02 K 1/14

(21) Anmeldenummer : 84200033.3

(22) Anmeldetag : 11.01.84

(54) Einphasensynchronmotor mit Läuferteilen mit winkelversteliter Magnetisierung.

(30) Priorität : 17.01.83 DE 3301264

(43) Veröffentlichungstag der Anmeldung :
22.08.84 Patentblatt 84/34

(45) Bekanntmachung des Hinweises auf die Patenterteilung : 30.12.86 Patentblatt 86/52

(84) Benannte Vertragsstaaten :
AT CH DE FR GB IT LI

(56) Entgegenhaltungen :
DE-A- 1 913 843
DE-U- 1 757 680
US-A- 2 449 021

(73) Patentinhaber : Philips Patentverwaltung GmbH
Billstrasse 80
D-2000 Hamburg 28 (DE)
DE
N.V. Philips' Gloeilampenfabrieken
Groenewoudseweg 1
NL-5621 BA Eindhoven (NL)
CH FR GB IT LI AT

(72) Erfinder : Bertram, Leo
Am Sender 10
D-5190 Stolberg (DE)

(74) Vertreter : Kupfermann, Fritz-Joachim et al
Philips Patentverwaltung GmbH Billstrasse 80 Postfach 10 51 49
D-2000 Hamburg 28 (DE)

EP 0 116 378 B1

**Beschreibung**

Die Erfindung bezieht sich auf einen Einphasensynchronmotor mit zwei parallelen Eisenschenkeln, auf die jeweils eine Erregerspule aufgeschoben ist und mit einem Läufer, der in axialer Richtung in Läuferteile mit diametraler und gegebenenfalls gegeneinander winkelverstellter Magnetisierung unterteilt ist.

Einphasensynchronmotoren mit parallelen Eisenschenkeln haben im allgemeinen einen dauermagnetischen Läufer mit einer diametralen Magnetisierung. Derartige Motoren werden beispielsweise eingesetzt in elektrischen Haushaltsgeräten, wie Zitrupressen oder Dosenöffnern. Das Betriebsverhalten wird dabei teilweise gestört durch ungünstige Kreisgüten des elektromagnetischen Kreises und Klebkräfte des dauermagnetischen Läufers.

Zur Kompensation der Klebkräfte und zur Anlaufverbesserung ist es aus der DE-GmS 17 57 680 und einem Aufsatz aus der Zeitschrift « Der Elektromeister », Heft 1, 1965, Seiten 13 und 14, insbesondere Seite 14, linke Spalte, letzter Absatz, und rechte Spalte, erster Absatz, bekannt, auf einer gemeinsamen Achse angeordnete Läuferteile gegeneinander zu verdrehen, wobei die Läuferteilflüsse parallelgeschaltet sind. Maßnahmen zur Verbesserung der Kreisgüte, d. h. zur Verringerung des magnetischen Leitwertes sind insbesondere bei Motoren höherer Leistung zwar notwendig, Wege dahin sind aber nicht aufgezeigt.

Weitere Betriebsstörungen ergeben sich aus den zum Wesen des Einphasensynchronmotors gehörenden, enorm starken Geschwindigkeitsschwankungen, aus subharmonischen Resonanzen der 100 Hz-Schwingung, beispielsweise im Bereich von 33 1/3 und 25 Hz, sowie aus Pendelungen oder Schwebungen über der 100 Hz-Schwingung. Diese Störungen lassen sich alle über den magnetischen Leitwert beeinflussen.

Es ist Aufgabe der Erfindung, einen Einphasensynchronmotor mit günstigerer Kreisgüte zu schaffen, um so das Betriebsverhalten zu verbessern und seinen Anwendungsbereich zu erweitern.

Die gestellte Aufgabe ist erfindungsgemäß dadurch gelöst, daß

die Eisenschenkel ohne ferromagnetischen Rückschluß nebeneinander angeordnet sind,

Teile der Schenkel paarweise beiderseits aus den Erregerspulen herausragen und dabei einander gegenüberliegende Polschuhe bilden, die paarweise herausragenden Schenkelteile derart abgebogen sind, daß sich hintereinanderliegende Polschuhpaare und somit fluchtende Statorbohrungen bilden,

zwei in den Statorbohrungen angeordneten Läuferteile einen einheitlichen Läufer bilden oder auf einer gemeinsamen Achse befestigt sind, wobei jeweils die Läuferteile magnetisch in Serie liegen.

Es entstehen damit in einem Motor zwei in Serie geschaltete Motoren, deren Läufer auf einer gemeinsamen Welle angeordnet sind, und neue Möglichkeiten, auf den magnetischen Leitwert, die Kreisgüte, Einluß nehmen, weil der magnetische Leitwert durch die Serienschaltung sinkt. Damit ist der Weg offen zu einer Verbesserung des gesamten dynamischen Verhaltens von Einphasensynchronmotoren, und zwar über das Anlaufverhalten hinaus. Wesentlich ist dazu die Bildung von zwei ohne ferromagnetischen Eisenrückschluß nebeneinander liegenden Statorpaketen mit zusammen vier Polschuhen bzw. zwei Statorbohrungen, die je einen Läuferteil mit einer radialen Magnetisierungsrichtung aufnehmen, die über die Welle verbunden und gegebenenfalls gegeneinander winkelverstellt sind. Durch die Winkelverstellung läßt sich in bekannter Weise das Klebemoment im wesentlichen ausgleichen. Das Anlaufverhalten läßt sich in diesem Fall sogar ohne technischen Mehraufwand verbessern.

Es ist zwar aus der US-PS 24 49 021 und der DE-OS 19 13 843 bekannt, das Blechpaket von Elektromotoren nach dem Aufschieben von Erregerspulen umzubiegen. Es entsteht dabei aber nur eine Statorbohrung, die nur einen Läufer aufnimmt.

Nach einer vorteilhaften Ausgestaltung der Erfindung ist vorgesehen, daß die radialen Magnetisierungsrichtungen der Läuferteile einander entgegengesetzt verlaufen.

Nach einer weiteren Ausgestaltung der Erfindung ist vorgesehen, daß die Magnetisierungsrichtungen der Läuferteile gegeneinander um einen Winkel $\alpha$ von maximal 90° verstellt sind.

Nach einer weiteren Ausgestaltung der Erfindung ist vorgesehen, daß die Statorpolschuhpaare gegeneinander um einen Winkel $\beta$ von maximal 90° verstellt sind. Durch die magnetische Serienschaltung ist diese Art der Winkelverstellung über die Statorpole günstiger. Es ergibt sich dabei nämlich, daß sich die Verstellwinkel der beiden Statorpolpaare addieren, so daß trotz großen Verstellwinkels z. B. das Aufschieben der Spulen gewährleistet bleibt (wirtschaftlichere Konstruktion).

Ein weiterer Vorteil ist dabei, daß das Klebemoment kompensiert wird bereits ohne Winkelverstellung der Läuferteile. Die Läuferteile können daher zu einem Läufer, der in beide Statorbohrungen eintaucht, zusammengefaßt werden. Für den Fall, daß die Läuferteile untereinander und auch die Polschuhpaare untereinander verstellt sind, soll nach einer weiteren Ausgestaltung der Erfindung die Summe der Verstellungen maximal 90°, also $(\alpha + \beta) \leqslant 90°$ betragen.

Nach einer weiteren Ausgestaltung der Erfindung ist vorgesehen, daß das Eisen der Schenkel in der Breite eine beachtlich größere Ausdehnung aufweist als die Dicke.

Nach einer weiteren Ausgestaltung der Erfindung ist vorgesehen, daß die Schenkel aus Einzelblechen aufgebaut sind und die Dicke der Einzelbleche der Schenkel zwischen 0,5 und 5, vorzugsweise 1,0 mm, beträgt.

Die Erfindung wird anhand der in den Zeichnungen dargestellten Ausführungsbeispiele näher erläutert. Es zeigen :

Figur 1 einen Elektromotor mit zwei parallelen Läuferteilen mit normaler entgegengesetzter Magnetisierung und (schraffiert) winkelverstellter Magnetisierung,

Figur 2 den Elektromotor nach Fig. 1 mit normaler entgegengesetzter Magnetisierung und winkelverstellten Statorpolschuhpaaren.

Das Eisen des Motorständers besteht aus zwei Eisenschenkeln 3a, 3b, auf die Erregerspulen 5a und 5b aufgesetzt sind. Die Eisenschenkel 3a und 3b sind in ihrem Verlauf innerhalb der Spulen 5a und 5b in einer Ebene 7 angeordnet. In der Ebene 7 hat das Eisen dabei eine Ausdehnung a in der Größenordnung eines Faktors zwischen sieben und fünfzehn, vorzugsweise zwölf, und senkrecht dazu eine Ausdehnung b in der Größenordnung eines Faktors eins bis sieben, vorzugsweise fünf. Das Eisen der Schenkel besteht aus ein bis sieben, vorzugsweise fünf, aufeinandergeschichteten Eisenblechen.

Aus den Spulen 5a und 5b stehen Schenkelteile 9a, 9b, 9c und 9d hervor. Die Schenkelteile 9a und 9b bzw. 9c und 9d liegen paarweise nebeneinander und bilden Polschuhpaare 11a, b. Die Schenkelteile 9a, 9b und 9c, 9d sind im Bereich zwischen den Spulen 5a, 5b und den Polschuhpaaren 11a, b um 90° aus der Ebene 7 heraus abgebogen. Zwischen den Polschuhpaaren sind Läuferteile 13a und 13b angeordnet. Diese Läuferteile 13a und 13b können dauermagnetisch ausgebildet und diametral magnetisiert sein. Beide Läuferteile 13a, 13b sind auf einer gemeinsamen Welle 15 montiert. Ihre Drehachse ist mit 16 bezeichnet.

Die Magnetisierungsrichtung 14 der beiden Läuferteile 13a und 13b kann winkelverstellt vorgesehen werden. Der Verstellwinkel α beträgt dabei maximal 90°. In der Zeichnung verlaufen die ausgezogen dargestellten Magnetisierungen einander entgegengesetzt. Bei der schraffiert dargestellten Magnetisierung verläuft diese um 90° versetzt.

Die Anzahl der Eisenbleche des Statoreisens hängt von den Flußverhältnissen im Läufer ab. Es muß lediglich auf die Eisensättigung geachtet werden. Für das nachträgliche Abbiegen der Schenkelteile 9a bis 9d ist es jedoch günstiger, so wenig Bleche wie möglich einzusetzen. Darüber hinaus ist die Schichtung aus weniger Blechen kostengünstiger. Dicke Bleche sind jedoch schwieriger zu biegen als dünnere. Es gilt also, für eine wirtschaftliche Fertigung ein Optimum der Abmessungen einzusetzen. Als zweckmäßig hat es sich erwiesen, wenn die Bleche zwischen 0,5 und 5 mm, vorzugsweise 1 mm, dick sind. Es ist vorgesehen, daß das Statoreisen in der Breite a wesentlich breiter ausgebildet ist als in der Tiefe b. Die Ausdehnung des Statoreisens in der Breite a, d. h. im Spulenbereich in der Ebene 7, ist dabei auf sieben bis fünfzehn Einheiten bemessen, während die Ausdehnung in der Tiefe b ein bis sieben Einheiten beträgt. Bevorzugt sind eine Breite a von zwölf Einheiten und eine Tiefe b von fünf Einheiten.

Wenn das Biegen der Eisenschenkel auf Schwierigkeiten stößt, dann ist es auch möglich, die Eisenschenkel 3a und 3b in dem Bereich der Spulen 5a und 5b enden zu lassen. An den so entstehenden Kopfenden der Schenkel lassen sich dann zuvor umgebogene Schenkelteile 9a bis 9d durch Aufschweißen oder Steckmontage befestigen.

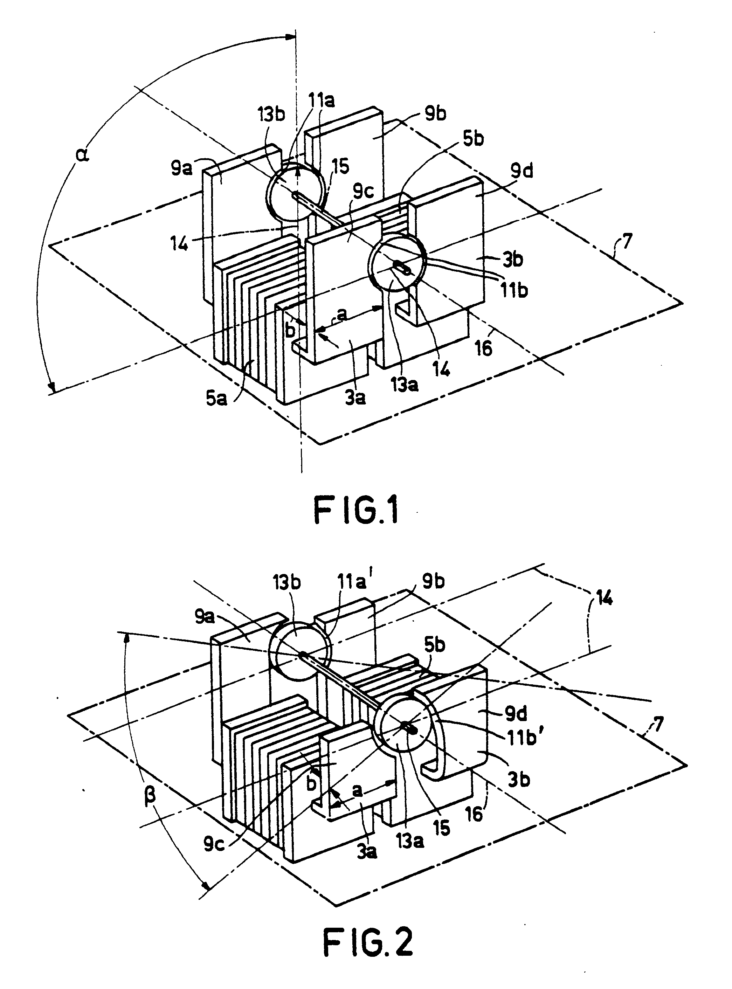

Die in Fig. 2 dargestellte Ausführungsform entspricht im wesentlichen der Ausführungsform nach Fig. 1. Auf die Eisenschenkel 3a und 3b sind Erregerspulen 5a und 5b aufgesetzt. Die Eisenschenkel 3a und 3b sind in ihrem Verlauf innerhalb der Spulen 5a und 5b in der Ebene 7 angeordnet. Die Ausdehnung des Eisens in dieser Ebene 7 entspricht den Angaben zu Fig. 1. Die aus den Spulen 5a und 5b herausragenden Schenkelteile 9a, 9b und 9c, 9d sind wieder um 90° aus der Ebene 7 heraus abgebogen und bilden Polschuhpaare 11a' und 11b'. Diese Polschuhpaare 11a' und 11b' sind um einen Winkel β von maximal 90° gegeneinander verstellt. Die dauermagnetischen Läuferteile 13a und 13b sind nicht winkelverstellt magnetisiert. Die Magnetisierung verläuft um 180° entgegengesetzt. In diesem Fall kann der Läufer aus einem Stück, beispielsweise in Form einer Walze bestehen.

Von Vorteil kann es aber auch sein, wenn sowohl die Polschuhpaare 11a' und 11b' als auch die Läuferteile 13a und 13b gegeneinander verstellt sind. In diesem Fall müssen α und β kleiner als 90° gewählt werden. Wenn (α + β) = 90° gewählt sind, dann ist das Klebemoment optimal ausgeschaltet.

Es kann natürlich auch gewünscht werden, daß das Klebemoment nicht optimal unterdrückt wird. In diesen Fällen wird bei Fig. 1 der Winkel α < 90°, bei Fig. 2 der Winkel β < 90° und bei der Winkelverstellung von Polschuhpaaren und Läuferteilen der Winkel (α + β) < 90° gewählt.

**Patentansprüche**

1. Einphasensynchronmotor mit zwei parallelen Eisenschenkeln (3a, 3b), auf die jeweils eine Erregerspule (5a, 5b) aufgeschoben ist und mit einem Läufer, der in axialer Richtung in Läuferteile mit diametraler und gegebenenfalls gegeneinander winkelverstellter Magnetisierung unterteilt ist, dadurch gekennzeichnet, daß

die Eisenschenkel ohne ferromagnetischen Rückschluß nebeneinander angeordnet sind,

Teile der Schenkel (3a, 3b) paarweise beiderseits aus den Erregerspulen (5a, 5b) herausragen und dabei einander gegenüberliegende Polschuhe (11a, 11b) bilden,

die paarweise herausragenden Schenkelteile (9a bis 9d) derart abgebogen sind, daß sich hintereinanderliegende Polschuhpaare und somit fluchtende Statorbohrungen bilden,

zwei in den Statorbohrungen angeordneten Läuferteile (13a, 13b) einen einheitlichen Läufer bilden oder auf einer gemeinsamen Achse (15) befestigt sind, wobei jeweils die Läuferteile magnetisch in Serie liegen.

2. Einphasensynchronmotor nach Anspruch 1, dadurch gekennzeichnet, daß die radialen Magnetisierungsrichtungen der Läuferteile (13a, 13b) einander entgegengesetzt verlaufen.

3. Einphasensynchronmotor nach Anspruch 1, dadurch gekennzeichnet, daß die Magnetisierungsrichtung der Läuferwelle gegeneinander um einen Winkel $\alpha$ von maximal 90° verstellt sind.

4. Einphasensynchronmotor nach den Ansprüchen 1 bis 3, dadurch gekennzeichnet, daß die Statorpolschuhpaare gegeneinander um einen Winkel $\beta$ von maximal 90° verstellt sind.

5. Einphasensynchronmotor nach Anspruch 3, dadurch gekennzeichnet, daß der Läufer aus einem Stück ist und in die beiden Polschuhpaare eintaucht.

6. Einphasensynchronmotor nach den Ansprüchen 1 bis 5, dadurch gekennzeichnet, daß das Eisen der Schenkel (3a, 3b) und Schenkelteile (9a bis 9d) in der Breite eine Ausdehnung (a) zwischen sieben und fünfzehn Einheiten und in der Dicke eine Ausdehnung (b) zwischen eins bis sieben Einheiten aufweist, wobei die Schenkel, die Läuferteile (13a, 13b) zwischen sich nehmend, einander mit ihren Schmalseiten gegenüberliegen.

7. Einphasensynchronmotor nach Anspruch 6, dadurch gekennzeichnet, daß der größeren Ausdehnung (a) der Schenkel (3a, 3b) von zwölf Einheiten eine kleinere Eisenausdehnung (b) senkrecht dazu von fünf Einheiten gegenübersteht.

8. Einphasensynchronmotor nach den Ansprüchen 1 bis 7, dadurch gekennzeichnet, daß die Schenkel aus Einzelblechen aufgebaut sind und die Dicke der Einzelbleche der Schenkel (3a, 3b) zwischen 0,5 und 5, vorzugsweise 1,0 mm, beträgt.

## Claims

1. A single phase synchronous motor comprising two parallel iron limbs (3a, 3b), onto each of which is slipped an excitation coil (5a, 5b), and a rotor, which is subdivided in axial direction into rotor parts having a diametrical and, as the case may be, an angularly relatively displaced magnetization, characterized in that

the iron limbs are arranged beside each other without ferromagnetic short circuit,

parts of the limbs (3a, 3b) project pairwise on both sides from the excitation coils (5a, 5b) and form oppositely arranged pole pieces (11a, 11b), the pairwise projecting limb parts (9a to 9d) are bent so that consecutively arranged pairs of pole pieces and hence aligned stator bores are formed,

two rotor parts (13a, 13b) arranged in the stator bores constitute an integral rotor or are secured on a common shaft (15), the rotor parts each time being arranged magnetically in series.

2. A single phase synchronous motor as claimed in Claim 1, characterized in that the radial directions of magnetization of the rotor parts (13a, 13b) extend opposite to each other.

3. A single phase synchronous motor as claimed in Claim 1, characterized in that the directions of magnetization of the rotor shaft are relatively shifted by an angle $\alpha$ of most 90°.

4. A single phase synchronous motor as claimed in Claims 1 to 3, characterized in that the pairs of pole pieces of the stator are relatively shifted by an angle $\beta$ of at most 90°.

5. A single phase synchronous motor as claimed in Claim 3, characterized in that the rotor is integral and is located within the two pairs of pole pieces.

6. A single phase synchronous motor as claimed in any one of Claims 1 to 5, characterized in that the iron of the limbs (3a, 3b) and of the limb parts (9a to 9d) has in the direction of width an expansion (a) between 7 and 15 units and has in the direction of thickness an expansion (b) between 1 and 7 units, the limbs, with the interposition of the rotor parts (13a, 13b), being arranged opposite to each other with their narrow sides.

7. A single phase synchronous motor as claimed in Claim 6, characterized in that the larger expansion (a) of the limbs (3a, 3b) of 12 units is offset by a smaller iron expansion (b) at right angles thereto of 5 units.

8. A single phase synchronous motor as claimed in any one of Claims 1 to 7, characterized in that the limbs are composed of individual sheets and the thickness of the individual sheets of the limbs (3a, 3b) lies between 0.5 and 5 mm and is preferably 1.0 mm.

## Revendications

1. Moteur monophasé synchrone muni de deux bras parallèles en fer (3a, 3b), sur lesquels est glissée chaque fois une bobine d'attaque (5a, 5b), et d'un rotor qui est subdivisé, dans la direction axiale, en parties de rotor présentant des magnétisations diamétrales et, le cas échéant, décalé angulairement en sens opposés, caractérisé en ce que

les bras en fer sont disposés l'un à côté de l'autre, sans connexion ferromagnétique,

des parties de bras (3a, 3b) font saillie, par paires, des deux bobines d'attaque (5a, 5b) et constituent des pièces polaires opposées (11a, 11b),

les parties de bras (9a, 9b) faisant saillie, par paires, sont courbées de façon à constituer des paires de pièces polaires successives et, de ce fait, des alésages de stator alignés,

deux parties de rotor (13a, 13b) disposées dans les alésages de stator constituent un rotor uniforme ou sont calées sur un arbre commun (15), les parties de rotor étant situées chaque fois magnétiquement en série.

2. Moteur monophasé synchrone selon la revendication 1, caractérisé en ce que les directions de magnétisation radiales des parties de rotor (13a, 13b) s'étendent en sens opposés.

3. Moteur monophasé synchrone selon la revendication 1, caractérisé en ce que les directions de magnétisation des parties de rotor sont décalées en sens opposés d'un angle $\alpha$ d'au maximum 90°.

4. Moteur monophasé synchrone selon les revendications 1 à 3, caractérisé en ce que les paires de pièces polaires de stator sont décalées en sens opposés d'un angle $\beta$ d'au maximum 90°.

5. Moteur monophasé synchrone selon la revendication 3, caractérisé en ce que le rotor est réalisé en une seule pièce, qui est introduite dans les deux paires des pièces polaires.

6. Moteur monophasé synchrone selon les revendications 1 à 5, caractérisé en ce que le fer des bras (3a et 3b) et des parties de bras (9a à 9d) présente une dilatation (a) dans la largeur comprise entre sept et quinze unités et dans l'épaisseur une dilatation (b) comprise entre une à sept unités, les bras étant situés l'un en face de l'autre par leurs faces étroites avec interposition des parties de rotor (13a, 13b).

7. Moteur monophasé synchrone selon la revendication 6, caractérisé en ce qu'à la plus grande dilatation (a) des bras (3a, 3b) de douze unités s'oppose une plus petite dilatation de fer (b), qui est perpendiculaire à la première dilatation et qui comprend cinq unités.

8. Moteur monophasé synchrone selon les revendications 1 à 7, caractérisé en ce que les bras sont composés de tôles et l'épaisseur des tôles des bras (3a, 3b) est comprise entre 0,5 et 5 et est de préférence de 1,0 mm.

FIG.1

FIG.2